# EUROPÄISCHE PATENTSCHRIFT

(11) **EP 3 974 180 B1**
(45) Veröffentlichungstag und Bekanntmachung des Hinweises auf die Patenterteilung: **24.12.2025**
(21) Anmeldenummer: 21196989.4
(22) Anmeldetag: 15.09.2021
(51) Int. Cl.: B32B 15/01, B21D 22/02, B21D 22/20, C21D 1/18, C21D 1/673, C21D 7/13, C21D 9/48, C22C 38/00, C23C 2/04, C23C 14/00, C23C 16/00, C23C 28/00, C21D 6/00, C21D 8/04, C21D 7/06, B23K 11/00, C25D 5/00, B21D 35/00, B62D 25/00, B23K 26/20

(54) **VERFAHREN ZUR HERSTELLUNG EINES WARMUMGEFORMTEN UND PRESSGEHÄRTETEN STAHLBLECHBAUTEILS**
METHOD FOR PRODUCING A THERMOFORMED AND PRESS-HARDENED STEEL SHEET COMPONENT
PROCÉDÉ DE FABRICATION D'UN ÉLÉMENT EN TÔLE D'ACIER MOULÉ À CHAUD ET TREMPÉ À LA PRESSE

(30) Priorität: 28.09.2020 DE 102020212136
(43) Veröffentlichungstag der Anmeldung: 30.03.2022
(73) Patentinhaber: Volkswagen Aktiengesellschaft, 38440 Wolfsburg (DE)
(72) Erfinder: FANDRICH, Tobias, 38106 Braunschweig (DE); KOTZIAN, Mathias, 38446 Wolfsburg (DE)

(56) Entgegenhaltungen:
- EP-A1- 2 289 770
- WO-A1-2019/194308
- DE-A1- 102017 222 240
- US-A1- 2010 098 956
- T. TAYLOR ET AL: "Critical review of automotive hot-stamped sheet steel from an industrial perspective", MATERIALS SCIENCE AND TECHNOLOGY, vol. 34, no. 7, 18 January 2018 (2018-01-18), GB, pages 809 - 861, XP055711575, ISSN: 0267-0836, DOI: 10.1080/02670836.2018.1425239

## Beschreibung

Die Erfindung betrifft ein Verfahren zur Herstellung eines warmumgeformten und pressgehärteten Stahlblechbauteils nach dem Oberbegriff des Anspruches 1 sowie ein warmumgeformtes und pressgehärtetes Stahlblechbauteil gemäß Anspruch 8.

Konventionelle Warmumformstähle, wie zum Beispiel 22MnB5, weisen nach dem Warmumformprozess ein nahezu vollständiges martensitisches Gefüge mit einer nominellen Zugfestigkeit Rm von etwa 1500MPa auf. Aktuell werden die Zugfestigkeiten dieser Warmumformstähle durch zu Beispiel eine Erhöhung des Kohlenstoffanteils im Stahlsubstrat weiter bis auf 2000MPa gesteigert, wie zum Beispiel 34MnB5 oder 37MnB5.

In einem beispielhaften Warmumformverfahren wird ein Stahlblechbauteil als Tailored-Welded-Blank aus einem Platinenverbund herstellt. Der noch ungehärtete Platinenverbund wird einem Wärmebehandlungsschritt zugeführt, in dem der Platinenverbund bis auf über die Austenitisierungstemperatur wärmebehandelt wird. Anschließend erfolgt ein Einlegeschritt, in dem der Platinenverbund im Heißzustand in ein Umformwerkzeug eingelegt wird. In einem folgenden Presshärteschritt wird der im Umformwerkzeug eingelegte Platinenverbund warmumgeformt und abgekühlt, und zwar unter Bildung des Stahlblechbauteils.

Im Karosseriebau können bei lokal unterschiedlichen Bereichen eines Karosseriebauteils unterschiedliche Korrosions-Anforderungen vorliegen. So ist zum Beispiel der Fußbereich einer warmumgeformten Säulenverstärkung für eine nasse oder feuchte Einbau-Umgebung auszulegen, so dass der Säulenverstärkungs-Fußbereich hohe Korrosionsschutz-Anforderungen erfüllen muss. Demgegenüber kann sich ein Mittelabschnitt sowie ein Kopfbereich der Säulenverstärkung in einer trockenen Einbau-Umgebung erstrecken, so dass diese Bereiche keine besondere Korrosionsschutz-Anforderungen erfüllen müssen.

Im Karosseriebau werden warmumgeformte Bauteile aufgrund mangelndem kathodischen Korrosionsschutz nicht in Nass- oder Feuchtbereichen der Fahrzeugkarosserie eingesetzt. Im nachfolgenden Text sind solche Nass- oder Feuchtbereiche allgemein als korrosionsgefährdete Bereiche bezeichnet. Diese können je nach Auslegungsvorschrift unterhalb der Türbrüstung liegen, während sich oberhalb der Türbrüstung der Trockenbereich erstreckt. Zudem können in der Auslegungsvorschrift auch Graubereiche zwischen korrosionsgefährdeten Bereichen und Trockenbereichen vordefiniert sein.

Aus der DE 11 2017 007 714 T5 und aus der DE 10 2017 222 204A1, sind Stahlmateriallen für ein Tailored-Welded-Blank bekannt.

Aus der WO 2018 / 210414 A1 ist ein Warmumformmaterial bekannt. Aus der EP 3 489 386 A1 ist ein beschichtetes Stahlsubstrat zum Warmumformen bekannt. Die EP 2 289 770 A1 offenbart eine korrosionsgeschützte geschweißte Blechplatine für ein Kraftfahrzeug und deren Herstellungsverfahren. Aus der WO 2019 / 194308 A1 sind ein geschichteter Rohling für Heißprägung, ein Verfahren zur Herstellung eines geschichteten Heißprägeformkörpers sowie ein geschichteter Heißprägeformkörper bekannt. Die US 2010/098956 A1 offenbart ein Beschichtungsmaterial zum Schutz von Metallen, insbesondere Stahl, vor Korrosion und/oder Verzunderung sowie ein Verfahren zur Beschichtung von Metallen. Es sei zusätzlich auf T. TAYLOR ET AL: "Critical review of automotive not-stamped sheet steel from an industrial perspective", MATERIALS SCIENCE AND TECHNOLOGY, Bd. 34, Nr. 7, 18. Januar 2018 (2018-01-18), Seiten 809-861, XP05571 1575, GB ISSN: 0267-0836, DOl: 10.10801026708362018.1425239 verwiesen.

Die Aufgabe der Erfindung besteht darin, ein Verfahren zur Herstellung eines warmumgeformten und pressgehärteten Stahlblechbauteils bereitzustellen, bei dem die Anzahl von Freiheitsgraden bei der Gestaltung des Stahlblechbauteils im Vergleich zum Stand der Technik erhöht ist.

Die Aufgabe ist durch die Merkmale des Anspruches 1 oder des Anspruches 8 gelöst. Bevorzugte Weiterbildungen der Erfindung sind in den Unteransprüchen offenbart.

Erfindungsgemäß wird auf Basis der "Tailored-Welded-Blank"-Technologie ein lasergeschweißter Platinenverbund einer Warmumformung unterzogen. Hierbei werden die Bauteilbereiche gemäß der Korrosionsanforderung im/am Fahrzeug definiert. Am Beispiel einer B-Säule kann zum Beispiel ein konventioneller aluminiumschmelztauchveredelter Werkstoff im Fußbereich (Richtung Schweller) eingesetzt werden, da der B-Säulenfuß im korrosionsgefährdeten Bereich des Fahrzeugs liegt und die AlSi-Beschichtung eine Korrosions-Barrierewirkung bietet (Hier kommt nur eine Materialgüte in Frage, die eine maximale Zugfestigkeit von 1500 MPa aufweist). Der Säulen- bzw. Kopfbereich der B-Säule liegt definitionsgemäß im Trockenbereich. Daher kann hier der Einsatz einer CR1900-Güte zum Beispiel 34MnB5 mit einer höheren Festigkeit und entsprechend reduzierter Blechdicke eingesetzt werden.

Ein wesentlicher Aspekt der Erfindung besteht darin, dass - im Gegensatz zur Umformung einer unbeschichteten Güte - erfindungsgemäß keine Schutzgasatmosphäre (zum Beispiel N2 - Stickstoff) im Ofen vorliegen muss. Es wird erfindungsgemäß wie im Stand der Technik entsprechend gefahren (das heißt mit trockener Luft).

In diesem Bereich muss ein Verzunderungsschutz appliziert werden. Dieser Zunderschutz kann zum Beispiel auf Basis einer organischen Beschichtung zur Verfügung gestellt werden, die mittels einem Bandbeschichtungsprozess auf das Stahlcoil aufgetragen wird. Jegliche anderen Möglichkeiten des Zunderschutzes sind ebenso denkbar. Zudem ist gegebenenfalls eine Verarbeitung ohne Zunderschutz möglich, jedoch aufgrund der Ofenatmosphäre eher ungünstig.

Der Zunderschutz ist zumeist nicht schweißbar, da eine oxidische Schicht entsteht. Demnach kann optional ein Strahlprozess im B-Säulen-Kopf (auf das Beispiel bezogen) oder in den Trockenbereichen (CR1900) vorgesehen werden. Der Einsatz diverser Schweißverfahren, kann ebenfalls ein Sandstrahlen der Bauteile umgehen/vermeiden. Hierbei stehen insbesondere Verfahrensvarianten im Fokus, die zu einer Zerrüttung/Aufbrechen der Oxidschicht führen. Hier sind viele Verfahren aus dem Aluminiumpunktschweißen bereits lange Zeit Stand der Technik, vergleiche zum Beispiel RoboSpin und/oder oszillierendes Punktschweißen. Auch sollte ein Laserschweißen ohne Entfernung der Schicht durchführbar sein.

Die Herstellung eines Tailored-Welded-Blank (TWB) entspricht dem Stand der Technik. Unter Umständen, ist eine lokale Entfernung der AlSi- und/oder Bandbeschichtung vorzusehen, um ein Einmischen von Aluminium in die Schweißnaht zu unterbinden (Bildung spröder Phasen). Alternativ kann auch ein Zusatzdraht verwendet werden.

Die Weiterverarbeitung ist analog zu konventionellen TWB-Platinen anzusehen. Man beachte, dass unter Umständen modifizierte Fügeverfahren zum Einsatz kommen, um eine Schweißbarkeit ohne Schichtentfernung zu gewährleisten.

Es ist hervorzuheben, dass im Stand der Technik kein TWB mit einer partiellen Festigkeit von >1500 MPa sowie unterschiedlichen Korrosionsschutzeigenschaften existiert.

Bevorzugt erfolgt der Einsatz einer Güte, zum Beispiel 34MnB5, mit einer Zugfestigkeit im gehärteten Zustand von >1750 MPa im TWB-Bereich mit geringerer Korrosionsschutzanforderung. Auch wird ein auf Aluminium oder Zink basierter Zunderschutz für diese hochfeste Güte bevorzugt, der u.a. durch einen Bandbeschichtungsprozess aufgetragen wird.

Es ist denkbar, zusätzlich zur Festigkeits-/Steifigkeitssteigerung (lokal) den Einsatz einer Patchverstärkung vorzusehen. Hierbei wird der Patch - wie konventionell - vor der Warmumformung auf die TWB-Platine geschweißt. Dies kann entweder im Bereich niedriger Korrosionsschutzanforderungen oder im Bereich höherer Korrosionsschutzanforderungen und/oder überlappend vorgesehen werden. Der Patch kann sowohl aus 22MnB5 mit einer AISi-Beschichtung bestehen, aber auch aus CR1900 mit einer Zunderschutzbeschichtung.

Alternativ sind andere Verfahren zum Auftrag eines Zunderschutzes auf die höherfeste Güte denkbar, etwa Gasphasenabscheidung (PVD/CVD/JVD/thermisches Verdampfen) oder Schmelztauchveredelung sowie elektrolytisches Beschichten. Diese Verfahren sind langjähriger Stand der Technik zum Abscheiden von Schichten auf Stahlsubstrat. Relevant für die Beschichtung ist die Gewährleistung eines Zunderschutzes bei einer Temperatur größer 850°C für mehrere Minuten in einer konventionellen Ofenatmosphäre.

Mit der Erfindung ist erstmalig die Möglichkeit zur Applikation einer höherfesten Stahlgüte in einem TWB-Bauteilverbund ermöglicht. Dies ist im Hinblick auf Leichtbau, auf LCA CO2 Reduktion, auf Kostenreduktion (insbesondere Materialkosten) sowie im Hinblick auf eine Erhöhung der Crash-Sicherheit von Vorteil.

Nachfolgend werden Erfindungsaspekte im Einzelnen hervorgehoben:
Gemäß dem Anspruch 1 weist der Platinenverbund zumindest eine erste Platine und eine zweite Platine auf. Die erste Platine ist speziell für den Verbau im korrosionsgefährdeten Bereich ausgelegt und mit einer Korrosionsschutzschicht beschichtet, die eine ausreichende Korrosionsschutzwirkung aufweist. Die zweite Platine ist für den Verbau in einem Trockenbereich ausgelegt und mit einer Zunderschutzschicht beschichtet, die keine oder eine signifikant geringere Korrosionsschutzwirkung aufweist.

Untersuchungen haben gezeigt, dass die Zunderschutzschicht eine gute Phosphatierbarkeit zeigt und unter Umständen auch korrosiv zumindest besser ist als ein unbeschichtetes Stahlsubstrat.

Eine bevorzugte Ausführungsform der Erfindung beruht auf den folgenden beiden Aspekten:
1. In gängiger Praxis kann ein Stahlblechbauteil für den Verbau im korrosionsgefährdeten Bereich als Korrosionsschutzschicht eine metallische Zunderschutzschicht, etwa eine AlSi-Beschichtung, aufweisen. Eine solche Korrosionsschutzschicht weist jedoch eine hohe Sperrwirkung auf, die die Effusion (Wasserstoff aus Werkstoff heraus, nach Härtung) behindert und damit den Wasserstoff im Stahlsubstrat "einsperrt". Dies kann im Stahlsubstrat zu einer Wasserstoff-Versprödung führen. Eine solche Wasserstoff-Versprödung ergibt sich speziell bei hoch- und höchstfeste Stähle (zum Beispiel 34MnB5) aufgrund des gesteigerten Kohlenstoffgehalts. Beim Verbau des Bauteils kann gegebenenfalls eine kritische Spannung auftreten, die in Verbindung mit Wasserstoff ein Bauteilversagen (das heißt wasserstoffinduzierte Rissbildung) hervorruft. Demgegenüber ist Stahl mit, im Vergleich zu hoch- und höchstfesten Stählen reduzierter Zugfestigkeit (das heißt reduziertem Kohlenstoffgehalt) weniger empfindlich gegenüber einer solchen wasserstoffinduzierten Rissbildung.
2. Zudem ist bekannt, bei einem Stahlblechbauteil, das für den Trockenbereich ausgelegt ist, auf eine Korrosionsschutzschicht (das heißt AISi-Beschichtung) zu verzichten und anstelle dessen das Stahlblechbauteil mit einer Zunderschutzschicht zu beschichten. Die Zunderschutzschicht weist keine oder eine signifikant geringere Korrosionsschutzwirkung auf. Die Zunderschutzschicht weist (im Vergleich zu einer AISi-Beschichtung) eine erhöhte Effusionsmöglichkeit auf, wodurch der Wasserstoff nach Härtung bei Raumtemperatur aus dem Stahlsubstrat geht. Eine solche Zunderschutzschicht ist allgemein bekannt und kann beispielhaft auf Basis einer organischen Beschichtung zur Verfügung gestellt werden.

Die beiden obigen Aspekte werden erfindungsgemäß bei der Substrat-Auswahl für die erste Platine und für die zweite Platine wie folgt berücksichtigt: So wird bevorzugt die für den Verbau im Trockenbereich ausgelegte Platine, die mit der Zunderschutzschicht beschichtet ist, aus einem hoch- oder höchstfestem Stahl gefertigt. Auf diese Weise kann die Zunderschutzschicht den hoch-/höchstfesten Stahl vor einem übermäßig großen Wasserstoff-Eintrag schützen, der ansonsten bei einer Belastung zu einer reduzierten Duktilität führen würde. Zudem weist die Zunderschutzschicht, im Vergleich zu der auf der ersten Platine beschichteten Korrosionsschutzschicht, eine erhöhte Effusionsmöglichkeit auf, wodurch der Wasserstoff nach Härtung aus dem Stahlsubstrat geht.

Andererseits wird die für den Verbau im korrosionsgefährdeten Bereich ausgelegte Platine, die mit der Korrosionsschutzschicht beschichtet ist, aus einem Stahlsubstrat gefertigt, das - im Vergleich zu hoch-/höchstfestem Stahl - eine geringere Zugfestigkeit (das heißt geringeren Kohlenstoffgehalt) aufweist und daher weniger empfindlich gegenüber einer wasserstoffinduzierten Rissbildung ist.

In einer konkreten Ausführungsvariante kann die Platine mit im gehärteten Zustand größerer Zugfestigkeit (das heißt die aus hoch-/höchstfestem Stahl gefertigte Platine) eine Blechdicke aufweisen, die im Vergleich zur Blechdicke der Platine mit kleinerer Zugfestigkeit reduziert ist.

Erfindungsgemäß ist das Stahlsubstrat der zweiten Platine mit, im gehärteten Zustand größerer Zugfestigkeit, einer Werkstoff-Güteklasse zur Herstellung von hoch- oder höchstfester Stahlblechbauteile zugeordnet, deren Zugfestigkeit im gehärteten Zustand bei Rm > 1700MPa, insbesondere bei Rm > 1800MPa liegt.

Erfindungsgemäß ist das Stahlsubstrat der ersten Platine mit, im gehärteten Zustand kleinerer Zugfestigkeit einer Werkstoff-Güteklasse zur Herstellung von Stahlblechbauteilen zugeordnet, deren Zugfestigkeit im gehärteten Zustand bei Rm < 1700MPa, insbesondere zwischen 1400MPa und 1700MPa liegt.

Erfindungsgemäß ist die Korrosionsschutzschicht eine Schmelztauchbeschichtung oder eine über eine Schmelztauchveredelung aufgebrachte metallische Schicht, und zwar eine AlSiAlO-Beschichtung. Zudem ist die Korrosionsschutzschicht erfindungsgemäß primär aluminiumhaltig.

Die Zunderschutzschicht kann in einer nicht von der Erfindung umfassten Vergleichsform auf Basis einer an sich bekannten organischen Beschichtung zur Verfügung gestellt werden. Erfindungsgemäß weist die Zunderschutzschicht metallische Zunderschutzpartikel (und zwar Mg) in einer ausschließlich anorganischen Matrix auf.

Besonders bevorzugt kann die Zunderschutzschicht (vor Warmumformung) ein dünner Beschichtungsfilm (< 10 Mikrometer, insbesondere < 7 Mikrometer) sein und damit signifikant "dünner" als die standardmäßig aufgetragenen AlSi- oder ZnFe-Schichten sein. Die dünnen Schichten können über eine Bandbeschichtung (Coil-coating), einen Gasphasenabscheidungsprozess (PVD/CVD/JVD/thermisches Verdampfen), ein elektrolytisches Beschichten aus der flüssigen Phase und/oder ein Schmelztauchverfahren umgesetzt werden.

Nachfolgend wird beispielhaft eine Prozesskette zur Herstellung des Stahlblechbauteils beschrieben: Demnach wird zunächst ein noch ungehärteter Platinenverbund hergestellt, der im weiteren Prozessverlauf der Warmumformung zugeführt wird. Zur Herstellung des noch ungehärteten Platinenverbunds werden die mit der Zunderschutzschicht beschichtete Platine und die mit der Korrosionsschutzschicht beschichtete Platine als voneinander separate Bauteile in einem Schweißschritt zum Platinenverbund verschweißt.

Vor Durchführung des Schweißvorgangs können optional die Zunderschutzschicht und/oder die Korrosionsschutzschicht von den Schweißkontaktstellen der jeweiligen Platine zum Beispiel durch Sandstrahlen lokal entfernt werden.

Alternativ dazu kann auf die lokale Entfernung der der Zunderschutzschicht und/oder Korrosionsschutzschicht vor der TWB-Herstellung verzichtet werden. Dies wird unter Umständen durch Zugabe eines speziellen Schweißzusatzwerkstoffs realisiert, der eine Al-Einmischung in die Schweißnaht verhindert. Auch ist es denkbar, dass nur die AlSi-beschichtete Stahlplatine von der Schicht entfernt werden muss, da es bei der zunderschutzbeschichteten Variante keine Einmischung in die Schweißnaht gibt.

Die mit der Korrosionsschutzschicht beschichtete Platine kann wie folgt bereitgestellt werden: So wird ein entsprechendes Stahlsubstrat als noch unbeschichtetes Bandmaterial (coil) mit der Korrosionsschutzschicht beschichtet. Dies kann in einem konventionellen Schmelztauchverfahren erfolgen. Anschließend wird das beschichtete Bandmaterial zur korrosionsfesten Platine zugeschnitten.

Alternativ und/oder zusätzlich wird die mit der Zunderschutzschicht beschichtete Platine wie folgt hergestellt: Ein entsprechendes Stahlsubstrat kann als noch unbeschichtetes Bandmaterial (coil) mit der Zunderschutzschicht in einem Beschichtungsprozess beschichtet werden. Der Beschichtungsprozess kann ebenfalls ein herkömmliches Schmelztauchverfahren oder ein physikalisches Gasphasen-Abscheidungs-Verfahren sein.

Das Stahlblechbauteil kann vor dem Verbau, insbesondere vor dem Punktschweißen in einer Fahrzeug-Karosserie, optional in einem Strahlprozess mediengestrahlt werden, und zwar im Zunderschutzbereich des Stahlblechbauteils, um im Hinblick auf eine Schweißeignung unter anderem eine Oxidschicht zu entfernen. Der Korrosionsschutzbereich des Stahlblechbauteils kann dagegen vom Strahlprozess ausgenommen bleiben. Alternativ dazu kann das komplette Stahlblechbauteil dem Strahlprozess unterworfen werden. Bei einem solchen vollständigen Strahlen des Bauteils würde man auch die Auflagendicke der Korrosionsschutzschicht reduzieren. Dies wäre eventuell aber für die Maßhaltigkeit der Bauteile relevant.

Nachfolgend sind Ausführungsbeispiele der Erfindung anhand der beigefügten Figuren beschrieben.

Es zeigen:
- Fig. 1: in einer vereinfachten Darstellung ein fertiggestelltes Stahlblechbauteil;
- Fig. 2: eine vergrößerte Schnittdarstellung aus der Fig. 1;
- Fig. 3: in einem Blockschaltdiagramm eine Prozesskette zur Herstellung des in der Fig. 1 gezeigten warmumgeformten und pressgehärteten Stahlblechbauteils; und
- Fig. 4: in einer Ansicht entsprechend Fig. 3 ein weiteres Ausführungsbeispiel.

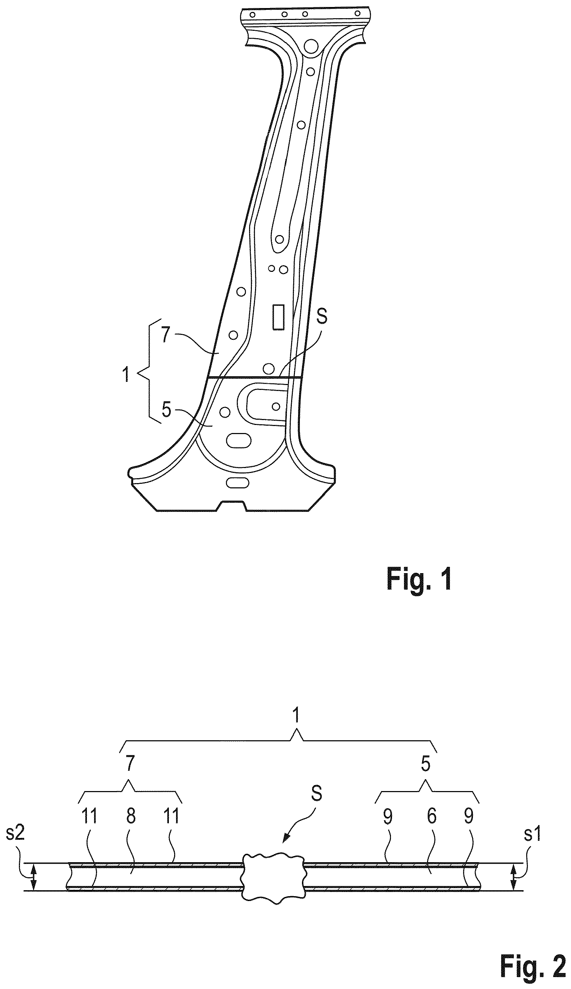

In der Fig. 1 ist ein warmumgeformtes sowie pressgehärtetes Stahlblechbauteil 1 gezeigt. Das Stahlblechbauteil 1 ist in der Fig. 1 beispielhaft als eine Säulenverstärkung zum Verbau zum Beispiel in einer B-Säule einer Fahrzeugkarosserie eines zweispurigen Fahrzeugs realisiert. Die Säulenverstärkung 1 ist als Tailored-Welded-Blank aus einem Platinenverbund mit einer, den Säulenfuß bildenden ersten Platine 5 und einer zweiten Platine 7 aufgebaut, die einen Säulen-Mittelbereich sowie einen Säulenkopf bildet. Die beiden Platinen 5, 7 sind an einer Schweißstelle S miteinander laserverschweißt. In der Einbaulage befindet sich die Säulenverstärkung 1 mit ihrer ersten Platine 5 in einem fahrzeugunteren korrosionsgefährdeten Bereich, während sich die zweite Platine 7 der Säulenverstärkung 1 in einem fahrzeugoberen Trockenbereich der Fahrzeugkarosserie erstreckt.

Erfindungsgemäß ist die erste Platine 5 speziell für den Verbau im korrosionsgefährdeten Bereich ausgelegt: So ist das Stahlsubstrat 6 der ersten Platine 5 mit einer Korrosionsschutzschicht 9 beschichtet, die zusätzlich zu einer Zunderschutzwirkung eine Korrosionsschutzwirkung aufweist. Demgegenüber ist die zweite Platine 7 speziell für den Verbau im Trockenbereich ausgelegt und mit einer Zunderschutzschicht 11 beschichtet, die keine oder eine signifikant geringere Korrosionsschutzwirkung aufweist.

Die Korrosionsschutzschicht 9 kann eine konventionelle metallische Zunderschutzschicht, bevorzugt eine AlSi-Beschichtung, sein. Eine solche konventionelle Korrosionsschutzschicht 9 bewirkt einerseits einen ausreichenden Korrosionsschutz in nasser oder feuchter Umgebung. Andererseits weist eine solche Korrosionsschutzschicht 9 jedoch eine hohe Sperrwirkung (im Falle von AISi) auf, die die Effusion (Wasserstoff aus Werkstoff heraus, nach Härtung) behindert und damit den Wasserstoff "einsperrt". Im Gegensatz zur Korrosionsschutzschicht 9 kann die Zunderschutzschicht 11 auf Basis einer organischen Beschichtung zur Verfügung gestellt werden. Bevorzugt weist die Zunderschutzschicht 11 metallische Zunderschutzpartikel (zum Beispiel Aluminium; Zn; Mg uvm.) in einer primär anorganischen Matrix auf.

Der Kern der Erfindung besteht darin, die oben beschriebenen unterschiedlichen Eigenschaften der Korrosionsschutzschicht 9 und der Zunderschutzschicht 11 bei der Materialauswahl der Stahlsubstrate 6, 8 der Platinen 5, 7 wie folgt zu nutzen: So wird bei der Stahlsubstrat-Auswahl für die erste Platine 5 auf den Einsatz von hoch- oder höchstfesten Stählen verzichtet. Bei solchen hoch- oder höchstfesten Stähle würde sich in Kombination mit der Korrosionsschutzschicht 9 eine übermäßig große Wasserstoff-Versprödung ergeben. Vielmehr wird bei der ersten Platine 5 als Stahlsubstrat 6 zum Beispiel 22MnB5 eingesetzt.

Demgegenüber wird bei der im Trockenbereich befindlichen zweiten Platine 7 der Säulenverstärkung 1 ein Stahlsubstrat 8 aus hoch- oder höchstfestem Stahl (zum Beispiel 34MnB5) eingesetzt. Die auf der zweiten Platine 7 beschichtete Zunderschutzschicht 11 weist keine ausgeprägte Korrosionsschutzwirkung auf.

Aufgrund des Einsatzes von hoch- oder höchstfesten Stählen kann die Blechdicke s₂ der im Trockenbereich befindlichen zweiten Platine 7 im Vergleich zur Blechdicke s₁ der im korrosionsgefährdeten Bereich befindlichen ersten Platine 5 reduziert werden, wie es in der Fig. 2 angedeutet ist.

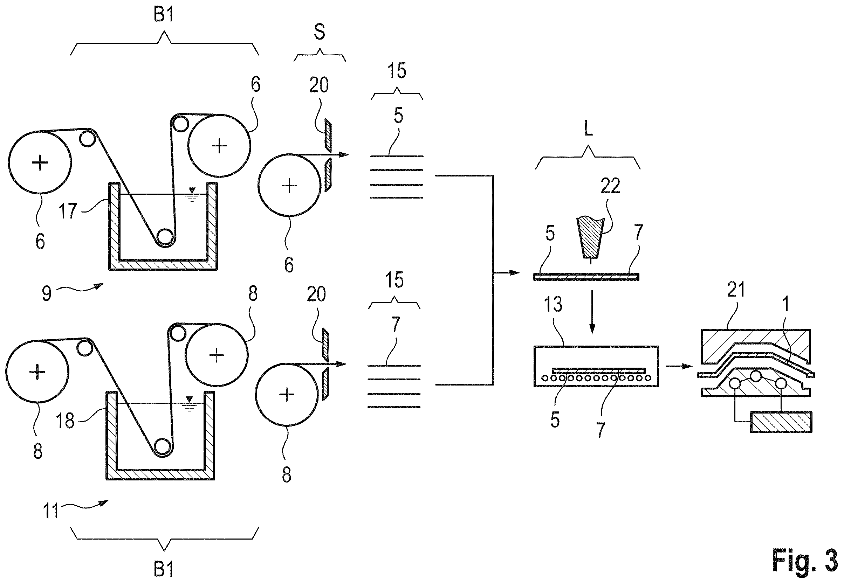

Nachfolgend wird anhand der Fig. 3 eine Prozessroute zur Herstellung des warmumgeformten und pressgehärteten Stahlblechbauteils 1 beschrieben: Demzufolge werden in Vorbereitung auf die Warmumformung zunächst die mit der Korrosionsschutzschicht 9 beschichtete Platine 5 und die mit der Zunderschutzschicht 11 beschichtete Platine 7 als separate Halbzeuge in Platinenstapeln 15 bereitgestellt.

Zur Herstellung der mit der Korrosionsschutzschicht 9 beschichteten Platinen 5 wird ein erster Beschichtungsprozess B1 durchgeführt, bei dem das Stahlsubstrat 6 als noch unbeschichtetes Bandmaterial (coil) einem Schmelztauch-Prozess unterworfen wird, bei dem es in einer Wickelstation in einer Fertigungsrichtung abgewickelt wird und durch ein Schmelztauchbad 17 gefördert wird. Das Schmelztauchbad 17 weist zum Beispiel eine Aluminium-Schmelze mit einem Silizium-Anteil sowie einem Eisen-Anteil und gegebenenfalls einem Magnesium-Anteil auf. Im Schmelztauchbad 17 wird das Stahlsubstrat-Band beidseitig mit der AlSi-Beschichtung 9 beschichtet. Das aus dem Schmelztauchbad 17 herausgeführte beschichtete Stahlsubstrat-Band wird anschließend in einer weiteren Wickelstation wieder zu einem Coil aufgewickelt. Das Coil mit dem beschichteten Stahlsubstrat-Band wird zu einer Platinen-Schneidanlage 20 transportiert, in der ein Platinenbeschnitt S stattfindet. Die in der Platinen-Schneidanlage 20 hergestellten Platinen 5 werden auf dem Platinenstapel 15 gestapelt. In gleicher Weise erfolgt in einem separaten Beschichtungs- und Schneidprozess B2, S die Herstellung der mit der Zunderschutzschicht 11 beschichteten zweiten Platinen 7.

Anschließend werden jeweils zwei Platinen 5, 7 in einem Schweißschritt L mit Hilfe einer Laserschweißvorrichtung 22 miteinander zum Platinenverbund verschweißt. Vor Durchführung des Schweißvorgangs kann die Zunderschutzschicht 11 und/oder die Korrosionsschutzschicht 9 von den Schweißkontaktstellen der jeweiligen Platine 5, 7 lokal entfernt werden.

Der noch ungehärtete Platinenverbund wird dann der Warmumformung unterworfen, bei der im Wärmebehandlungsofen 13 der Platinenverbund bis auf über die Austenitisierungstemperatur Ac3 wärmebehandelt wird. Anschließend erfolgt ein Einlegeschritt, in dem der Platinenverbund im Heißzustand in ein Umformwerkzeug 21 eingelegt wird. Im folgenden Presshärteschritt wird der im Umformwerkzeug 21 eingelegte Platinenverbund warmumgeformt und abgekühlt, wodurch das Stahlblechbauteil 1 erzeugt wird. Nach erfolgter Warmumformung kann das Stahlblechbauteil 1 einer nicht näher dargestellten Nachbearbeitungsstation zugeführt werden, in der beispielhaft Schneidoperationen erfolgen können.

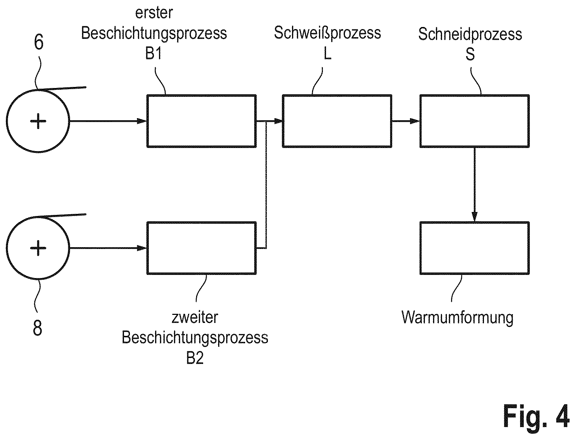

In der Fig. 4 ist eine alternative Prozessroute zur Herstellung des warmumgeformten und pressgehärteten Stahlblechbauteils 1 beschrieben: Demzufolge werden zunächst das noch unbeschichtete Bandmaterial 6 im ersten Beschichtungsprozess B1 mit der Korrosionsschicht 9 beschichtet. In gleicher Weise wird das noch unbeschichtete Bandmaterial 8 im zweiten Beschichtungsprozess B2 mit der Zunderschutzschicht 11 beschichtet. Anschließend werden das mit der Korrosionsschutzschicht 9 beschichtete Bandmaterial 6 und das mit der Zunderschutzschicht 11 beschichtete Bandmaterial 8 in einem Schweißschritt L miteinander verschweißt. Nach erfolgtem Schweißprozess L wird der Schneidschritt S durchgeführt, in dem der Platinenverbunds erzeugt wird. Dieser wird der Warmumformung zugeführt.

### Bezugszeichenliste

- 1: Stahlblechbauteil
- 5: erste Platine
- 6: Stahlsubstrat der ersten Platine
- 7: zweite Platine
- 8: Stahlsubstrat der zweiten Platine
- 9: Korrosionsschutzschicht
- 11: Zunderschutzschicht
- 13: Wärmebehandlungsofen
- 15: Platinenstapel
- 17, 18: Schmelztauchbad
- 20: Platinenbeschnitt
- 21: Umformwerkzeug
- 22: Laserschweißvorrichtung
- s₁, s₂: Blechdicken
- B1: erste Beschichtungsprozess
- B2: zweiter Beschichtungsprozess
- L: Schweißprozess
- S: Schneidprozess

### Bezugszeichenliste

- 1: Stahlblechbauteil
- 5: erste Platine
- 6: Stahlsubstrat der ersten Platine
- 7: zweite Platine
- 8: Stahlsubstrat der zweiten Platine
- 9: Korrosionsschutzschicht
- 11: Zunderschutzschicht
- 13: Wärmebehandlungsofen
- 15: Platinenstapel
- 17, 18: Schmelztauchbad
- 20: Platinenbeschnitt
- 21: Umformwerkzeug
- 22: Laserschweißvorrichtung
- s₁, s₂: Blechdicken
- B1: erste Beschichtungsprozess
- B2: zweiter Beschichtungsprozess
- L: Schweißprozess
- S: Schneidprozess

## Patentansprüche

1. Verfahren zur Herstellung eines warmumgeformten und pressgehärteten Stahlblechbauteils (1), das als Tailored-Welded-Blank aus einem Platinenverbund hergestellt wird, mit
- einem Wärmebehandlungsschritt, in dem der lasergeschweißte Platinenverbund bis auf über die Austenitisierungstemperatur (Ac3) wärmebehandelt wird,
- einem Einlegeschritt, in dem der Platinenverbund im Heißzustand in ein Umformwerkzeug (21) eingelegt wird, und
- einem Presshärteschritt, in dem der im Umformwerkzeug (21) eingelegte Platinenverbund warmumgeformt und abgekühlt wird, und zwar unter Bildung des Stahlblechbauteils (1),
wobei der Platinenverbund zumindest eine erste Platine (5) und eine zweite Platine (7) aufweist, und
wobei die erste Platine (5) für einen Verbau in einem korrosionsgefährdeten Bereich ausgelegt ist und mit einer Korrosionsschutzschicht (9) beschichtet ist, und
wobei die zweite Platine (7) für einen Verbau in einem Trockenbereich ausgelegt ist und mit einer von der Korrosionsschicht (9) unterschiedlichen Zunderschutzschicht (11) beschichtet ist, und
wobei im Wärmebehandlungsschritt keine Schutzgasatmosphäre im Ofen (13) vorliegen muss, und
wobei der Wärmebehandlungsschritt mit trockener Luft gefahren wird, und
wobei die Korrosionsschutzschicht (9) eine Schmelztauchbeschichtung oder eine über eine Schmelztauchveredelung aufgebrachte metallische Schicht ist, und zwar eine AlSiAlO-Beschichtung, und
wobei die Korrosionsschutzschicht (9) primär aluminiumhaltig ist, und
wobei die Zunderschutzschicht (11) metallische Zunderschutzpartikel aus Mg in einer ausschließlich anorganischen Matrix aufweist, und
wobei vorgesehen ist, dass das Stahlsubstrat (8) der zweiten Platine (7) einer Werkstoff-Güteklasse zur Herstellung von hoch- und/oder höchstfester Stahlblechbauteile zugeordnet ist, deren Zugfestigkeit im gehärteten Zustand bei Rm > 1700MPa, insbesondere bei Rm > 1800MPa liegt, und
wobei vorgesehen ist, dass das Stahlsubstrat (6) der ersten Platine (5) einer Werkstoff-Güteklasse zur Herstellung von Stahlblechbauteilen zugeordnet ist, deren Zugfestigkeit im gehärteten Zustand bei Rm < 1700MPa, insbesondere 1400MPa < Rm < 1700MPa liegt.

2. Verfahren nach Anspruch 1, **dadurch gekennzeichnet, dass** die erste Platine (5) und die zweite Platine (7) aus unterschiedlichen Stahlsubstraten (6, 8) gefertigt sind, die im gehärteten Zustand jeweils unterschiedlich hohe Zugfestigkeiten (Rm) aufweisen, und dass insbesondere das Stahlsubstrat (8) der zweiten Platine (7) im gehärteten Zustand eine größere Zugfestigkeit aufweist als das Stahlsubstrat (6) der ersten Platine (5).

3. Verfahren nach Anspruch 1 oder 2, **dadurch gekennzeichnet, dass** zur Herstellung des noch ungehärteten Platinenverbunds die mit der Korrosionsschutzschicht (9) beschichtete erste Platine (5) und die mit der Zunderschutzschicht (11) beschichtete zweite Platine (7) als voneinander separate Halbzeuge in einem Schweißschritt (L) miteinander verschweißt werden, und/oder dass insbesondere vor Durchführung des Schweißvorgangs optional die Zunderschutzschicht (11) und/oder die Korrosionsschutzschicht (9) von den Schweißkontaktstellen (19) der jeweiligen Platine (5, 7) lokal entfernt werden.

4. Verfahren nach einem der vorhergehenden Ansprüche, **dadurch gekennzeichnet, dass** zur Bereitstellung der mit der Korrosionsschutzschicht (9) beschichteten ersten Platine (5) ein erster Beschichtungsprozess (B1) erfolgt, bei dem das Stahlsubstrat (6) als noch unbeschichtetes Bandmaterial mit der Korrosionsschutzschicht (9) beschichtet wird, etwa in einem Schmelztauchverfahren, und dass insbesondere anschließend das beschichtete Bandmaterial zur ersten Platine (5) zugeschnitten wird.

5. Verfahren nach einem der vorhergehenden Ansprüche, **dadurch gekennzeichnet, dass** zur Bereitstellung der mit der Zunderschutzschicht (11) beschichteten zweiten Platine (7) ein zweiter Beschichtungsprozess (B2) erfolgt, bei dem das Stahlsubstrat (8) als noch unbeschichtetes Bandmaterial mit der Zunderschutzschicht (11) beschichtet wird, etwa in einer Bandbeschichtung, einem physikalischen Gasphasen-Abscheidungs-Verfahren, einer elektrolytischen Beschichtung oder in einem Schmelztauchverfahren, und dass insbesondere anschließend das beschichtete Bandmaterial zur zweiten Platine (7) zugeschnitten wird.

6. Verfahren nach einem der vorhergehenden Ansprüche, **dadurch gekennzeichnet, dass** zur Herstellung des noch ungehärteten Platinenverbunds das mit der Korrosionsschutzschicht (9) beschichtete Bandmaterial (6) und das mit der Zunderschutzschicht (11) beschichtete Bandmaterial (8) in einem Schweißschritt (L) miteinander verschweißt werden, und dass nachfolgend ein Schneidprozess (S) zur Erzeugung des noch ungehärteten Platinenverbunds erfolgt.

7. Verfahren nach einem der vorhergehenden Ansprüche, **dadurch gekennzeichnet, dass** das Stahlblechbauteil (1) vor dem Verbau, insbesondere vor dem Punktschweißen in einer Fahrzeug-Karosserie, in einem Strahlprozess mediengestrahlt wird, und zwar im Zunderschutzbereich des Stahlblechbauteils (1), um im Hinblick auf eine Schweißeignung unter anderem eine Oxidschicht zu entfernen, und dass der Korrosionsschutzbereich des Stahlblechbauteils (1) vom Strahlprozess ausgenommen bleibt oder alternativ das komplette Stahlblechbauteil (1) dem Strahlprozess unterworfen wird.

8. Warmumgeformtes und pressgehärtetes Stahlblechbauteil, das als Tailored-Welded-Blank aus einem Platinenverbund hergestellt ist, wobei der Platinenverbund zumindest eine erste Platine (5) und eine zweite Platine (7) aufweist, wobei die erste Platine (5) für einen Verbau in einem korrosionsgefährdeten Bereich ausgelegt ist und mit einer Korrosionsschutzschicht (9) beschichtet ist, und wobei die zweite Platine (7) für einen Verbau in einem Trockenbereich ausgelegt ist und mit einer von der Korrosionsschicht (9) unterschiedlichen Zunderschutzschicht (11) beschichtet ist,
wobei die Korrosionsschutzschicht (9) eine Schmelztauchbeschichtung oder eine über eine Schmelztauchveredelung aufgebrachte metallische Schicht ist, und zwar eine AlSiAlO-Beschichtung, und wobei die Korrosionsschutzschicht (9) primär aluminiumhaltig ist, und wobei die Zunderschutzschicht (11) metallische Zunderschutzpartikel aus Mg in einer ausschließlich anorganischen Matrix aufweist, und
wobei vorgesehen ist, dass das Stahlsubstrat (8) der zweiten Platine (7) einer Werkstoff-Güteklasse zur Herstellung von hoch- und/oder höchstfester Stahlblechbauteile zugeordnet ist, deren Zugfestigkeit im gehärteten Zustand bei Rm > 1700MPa, insbesondere bei Rm > 1800MPa liegt, und
wobei vorgesehen ist, dass das Stahlsubstrat (6) der ersten Platine (5) einer Werkstoff-Güteklasse zur Herstellung von Stahlblechbauteilen zugeordnet ist, deren Zugfestigkeit im gehärteten Zustand bei Rm < 1700MPa, insbesondere 1400MPa < Rm < 1700MPa liegt.

## Claims

1. Method for producing a hot-formed and press-hardened sheet steel component (1) which is produced as a tailor welded blank from a blank composite, comprising
- a heat treatment step in which the laser-welded blank composite is heat-treated to above the austenitizing temperature (Ac3),
- an insertion step in which the blank composite is inserted in the hot state into a forming tool (21), and
- a press-hardening step in which the blank composite inserted in the forming tool (21) is hot-formed and cooled, specifically to form the sheet steel component (1),
wherein the blank composite comprises at least a first blank (5) and a second blank (7), and
wherein the first blank (5) is designed for installation in a region prone to corrosion and is coated with a corrosion protection layer (9), and
wherein the second blank (7) is designed for installation in a dry region and is coated with a scale protection layer (11) which is different from the corrosion layer (9), and
wherein a protective gas atmosphere does not need to be present in the furnace (13) during the heat treatment step, and
wherein the heat treatment step is carried out with dry air, and
wherein the corrosion protection layer (9) is a hot-dip coating or a metal layer applied via hot-dip processing, namely an AlSiAlO coating, and
wherein the corrosion protection layer (9) primarily contains aluminum, and
wherein the scale protection layer (11) comprises metal scale protection particles of Mg in an exclusively inorganic matrix, and
wherein it is provided that the steel substrate (8) of the second blank (7) is assigned to a material quality class for the production of high-strength and/or ultrahigh-strength sheet steel components, the tensile strength of which in the hardened state is Rm > 1700 MPa, in particular Rm > 1800 MPa, and
wherein it is provided that the steel substrate (6) of the first blank (5) is assigned to a material quality class for the production of sheet steel components, the tensile strength of which in the hardened state is Rm < 1700 MPa, in particular 1400 MPa < Rm < 1700 MPa.

2. Method according to claim 1, **characterized in that** the first blank (5) and the second blank (7) are made of different steel substrates (6, 8) which each have different tensile strengths (Rm) in the hardened state, **and in that** in particular the steel substrate (8) of the second blank (7) has a greater tensile strength in the hardened state than the steel substrate (6) of the first blank (5).

3. Method according to claim 1 or 2, **characterized in that** to produce the yet unhardened blank composite, the first blank (5) coated with the corrosion protection layer (9) and the second blank (7) coated with the scale protection layer (11) are welded together as separate semi-finished products in a welding step (L),
**and/or in that** in particular before carrying out the welding operation, the scale protection layer (11) and/or the corrosion protection layer (9) are optionally removed locally from the welding contact points (19) of each blank (5, 7).

4. Method according to any of the preceding claims, **characterized in that** to provide the first blank (5) coated with the corrosion protection layer (9), a first coating process (B1) is carried out in which the steel substrate (6), as a yet uncoated strip material, is coated with the corrosion protection layer (9), for example in a hot-dip process, **and in that** in particular subsequently, the coated strip material is cut to form the first blank (5).

5. Method according to any of the preceding claims, **characterized in that** to provide the second blank (7) coated with the scale protection layer (11), a second coating process (B2) is carried out in which the steel substrate (8), as a yet uncoated strip material, is coated with the scale protection layer (11), for example in a strip coating procedure, a physical vapor deposition method, an electrolytic coating procedure or in a hot-dip method, **and in that** in particular subsequently, the coated strip material is cut to form the second blank (7).

6. Method according to any of the preceding claims, **characterized in that** to produce the yet unhardened blank composite, the strip material (6) coated with the corrosion protection layer (9) and the strip material (8) coated with the scale protection layer (11) are welded together in a welding step (L), **and in that** a cutting process (S) is then carried out to produce the yet unhardened blank composite.

7. Method according to any of the preceding claims, **characterized in that** the sheet steel component (1) is media-blasted, specifically in the scale protection region of the sheet steel component (1), in a blasting process before installation, in particular before spot welding in a vehicle body, in order to remove, among other things, an oxide layer with a view to weldability,
**and in that** the corrosion protection region of the sheet steel component (1) remains excluded from the blasting process or, alternatively, the entire sheet steel component (1) is subjected to the blasting process.

8. Hot-formed and press-hardened sheet steel component which is produced as a tailor welded blank from a blank composite, wherein the blank composite comprises at least a first blank (5) and a second blank (7), wherein the first blank (5) is designed for installation in a region prone to corrosion and is coated with a corrosion protection layer (9), and wherein the second blank (7) is designed for installation in a dry region and is coated with a scale protection layer (11) which is different from the corrosion layer (9),
wherein the corrosion protection layer (9) is a hot-dip coating or a metal layer applied via hot-dip processing, namely an AlSiAlO coating, and wherein the corrosion protection layer (9) primarily contains aluminum, and wherein the scale protection layer (11) comprises metal scale protection particles of Mg in an exclusively inorganic matrix, and
wherein it is provided that the steel substrate (8) of the second blank (7) is assigned to a material quality class for the production of high-strength and/or ultrahigh-strength sheet steel components, the tensile strength of which in the hardened state is Rm > 1700 MPa, in particular Rm > 1800 MPa, and
wherein it is provided that the steel substrate (6) of the first blank (5) is assigned to a material quality class for the production of sheet steel components, the tensile strength of which in the hardened state is Rm < 1700 MPa, in particular 1400 MPa < Rm < 1700 MPa.

## Revendications

1. Procédé de fabrication d'un élément de construction en tôle d'acier (1) formé à chaud et durci par compression, qui est fabriqué comme flanc soudé sur mesure à partir d'un ensemble plaquette, comportant
- une étape de traitement thermique au cours de laquelle l'ensemble plaquette soudé au laser est traité thermiquement jusqu'à une température supérieure à la température d'austénitisation (Ac3),
- une étape d'insertion, au cours de laquelle l'ensemble plaquette est inséré à chaud dans un outil de formage (21), et
- une étape de durcissement par compression, au cours de laquelle l'ensemble plaquette inséré dans l'outil de formage (21) est déformé à chaud et refroidi, et ce en formant l'élément de construction en tôle d'acier (1),
dans lequel l'ensemble plaquette présente au moins une première plaquette (5) et une seconde plaquette (7), et
dans lequel la première plaquette (5) est conçue pour un montage dans une zone à risque de corrosion et est revêtue d'une couche de protection contre la corrosion (9), et
dans lequel la seconde plaquette (7) est conçue pour un montage dans une zone sèche et est revêtue d'une couche de protection contre la calamine (11) différente de la couche de corrosion (9), et
dans lequel, au cours de l'étape de traitement thermique, il n'est pas nécessaire qu'une atmosphère de gaz protecteur soit présente dans le four (13), et
dans lequel l'étape de traitement thermique est réalisée avec de l'air sec, et
dans lequel la couche de protection contre la corrosion (9) est un revêtement par immersion à chaud ou une couche métallique appliquée par l'intermédiaire d'un affinage par immersion à chaud, à savoir un revêtement AlSiAlO, et
dans lequel la couche de protection contre la corrosion (9) contient principalement de l'aluminium, et
dans lequel la couche de protection contre la calamine (11) présente des particules métalliques de protection contre la calamine en Mg dans une matrice exclusivement inorganique, et
dans lequel il est prévu que le substrat en acier (8) de la seconde plaquette (7) soit associé à une classe de qualité de matériau pour la fabrication d'éléments de construction en tôle d'acier à haute et/ou très haute résistance, dont la résistance à la traction à l'état durci se situe à Rm > 1 700 MPa, en particulier à Rm > 1 800 MPa, et
dans lequel il est prévu que le substrat en acier (6) de la première plaquette (5) soit associé à une classe de qualité de matériau pour la fabrication d'éléments de construction en tôle d'acier, dont la résistance à la traction à l'état durci se situe à Rm < 1 700 MPa, en particulier 1 400 MPa < Rm < 1 700 MPa.

2. Procédé selon la revendication 1, **caractérisé en ce que** la première plaquette (5) et la seconde plaquette (7) sont préparées à partir de différents substrats d'acier (6, 8) qui, à l'état durci, présentent respectivement des résistances à la traction (Rm) différentes, et **en ce que**, en particulier, le substrat d'acier (8) de la seconde plaquette (7) présente, à l'état durci, une plus grande résistance à la traction que le substrat d'acier (6) de la première plaquette (5).

3. Procédé selon la revendication 1 ou 2, **caractérisé en ce que,** pour la fabrication de l'ensemble plaquette encore non durci, la première plaquette (5) revêtue de la couche de protection contre la corrosion (9) et la seconde plaquette (7) revêtue de la couche de protection contre la calamine (11) sont soudées l'une à l'autre en tant que produits semi-finis séparés l'un de l'autre dans une étape de soudage (L), **et/ou en ce que**, en particulier avant la réalisation de l'opération de soudage, la couche de protection contre la calamine (11) et/ou la couche de protection contre la corrosion (9) sont enlevées localement des points de contact de soudage (19) de la plaquette (5, 7) respective.

4. Procédé selon l'une des revendications précédentes,
**caractérisé en ce que,** pour la mise à disposition de la première plaquette (5) revêtue de la couche de protection contre la corrosion (9), un premier processus de revêtement (B1) est effectué, dans lequel le substrat en acier (6) est revêtu de la couche de protection contre la corrosion (9) sous forme de matériau en bande encore non revêtu, par exemple dans un procédé d'immersion à chaud,
et **en ce que**, en particulier, le matériau en bande revêtu est ensuite découpé en la première plaquette (5).

5. Procédé selon l'une des revendications précédentes,
**caractérisé en ce que,** pour la mise à disposition de la seconde plaquette (7) revêtue de la couche de protection contre la calamine (11), un second processus de revêtement (B2) est effectué, dans lequel le substrat en acier (8) est revêtu de la couche de protection contre la calamine (11) en tant que matériau en bande encore non revêtu, par exemple dans un revêtement en bande, un procédé de dépôt physique en phase vapeur, un revêtement électrolytique ou dans un procédé d'immersion à chaud, **et en ce que**, en particulier, le matériau en bande revêtu est ensuite découpé en la seconde plaquette (7).

6. Procédé selon l'une des revendications précédentes,
**caractérisé en ce que,** pour fabriquer l'ensemble plaquette encore non durci, le matériau en bande (6) revêtu de la couche de protection contre la corrosion (9) et le matériau en bande (8) revêtu de la couche de protection contre la calamine (11) sont soudés l'un à l'autre dans une étape de soudage (L), **et en ce qu'**un processus de coupe (S) est ensuite effectué pour produire l'ensemble plaquette encore non durci.

7. Procédé selon l'une des revendications précédentes,
**caractérisé en ce que** l'élément de construction en tôle d'acier (1) est soumis à un processus de grenaillage par projection d'abrasifs avant le montage, en particulier avant le soudage par points dans une carrosserie de véhicule, et ce dans la zone de protection contre la calamine de l'élément de construction en tôle d'acier (1), afin d'éliminer entre autres une couche d'oxyde en vue d'une aptitude au soudage, **et en ce que** la zone de protection contre la corrosion de l'élément de construction en tôle d'acier (1) reste exclue du processus de grenaillage ou, en variante, l'élément de construction en tôle d'acier (1) complet est soumis au processus de grenaillage.

8. Élément de construction en tôle d'acier formé à chaud et durci par compression, qui est fabriqué comme flanc soudé sur mesure à partir d'un ensemble plaquette, dans lequel l'ensemble plaquette présente au moins une première plaquette (5) et une seconde plaquette (7), dans lequel la première plaquette (5) est conçue pour un montage dans une zone à risque de corrosion et est revêtue d'une couche de protection contre la corrosion (9), et dans lequel la seconde plaquette (7) est conçue pour un montage dans une zone sèche et est revêtue d'une couche de protection contre la calamine (11) différente de la couche de corrosion (9),
dans lequel la couche de protection contre la corrosion (9) est un revêtement par immersion à chaud ou une couche métallique appliquée par l'intermédiaire d'un affinage par immersion à chaud, et à savoir un revêtement AlSiAlO, et dans lequel la couche de protection contre la corrosion (9) contient principalement de l'aluminium, et dans lequel la couche de protection contre la calamine (11) présente des particules de protection contre la calamine métalliques en Mg dans une matrice exclusivement inorganique, et
dans lequel il est prévu que le substrat en acier (8) de la seconde plaquette (7) soit associé à une classe de qualité de matériau pour la fabrication d'éléments de construction en tôle d'acier à haute et/ou très haute résistance, dont la résistance à la traction à l'état durci se situe à Rm > 1 700 MPa, en particulier à Rm > 1 800 MPa, et
dans lequel il est prévu que le substrat en acier (6) de la première plaquette (5) soit associé à une classe de qualité de matériau pour la fabrication d'éléments de construction en tôle d'acier, dont la résistance à la traction à l'état durci se situe à Rm < 1 700 MPa, en particulier 1 400 MPa < Rm < 1 700 MPa.
